(19) Europäisches Patentamt
European Patent Office
Office européen des brevets

(11) Veröffentlichungsnummer: **0 209 024**
**A2**

(12) # EUROPÄISCHE PATENTANMELDUNG

(21) Anmeldenummer: **86109190.8**

(22) Anmeldetag: **04.07.86**

(51) Int. Cl.⁴: **C 09 K 3/16**, C 09 D 11/02, C 09 D 7/12

(30) Priorität: **16.07.85 DE 3525308**

(43) Veröffentlichungstag der Anmeldung: **21.01.87 Patentblatt 87/4**

(84) Benannte Vertragsstaaten: **DE FR GB IT**

(71) Anmelder: **BAYER AG, Konzernverwaltung RP Patentabteilung, D-5090 Leverkusen 1 Bayerwerk (DE)**

(72) Erfinder: **Wank, Joachim, Zülpicher Strasse 7, D-4047 Dormagen 5 (DE)**
Erfinder: **Schmidt, Manfred, Dr., Erich-Klausener-Strasse 37, D-4150 Krefeld (DE)**
Erfinder: **Waldenrath, Werner, Dipl.-Ing., Maastrichter Strasse 40, D-5000 Köln 1 (DE)**
Erfinder: **Schmitz, Heinz, Zweite Gewanne 4, D-4047 Dormagen (DE)**

(54) **Antistatische Ausrüstung von Beschichtungsmassen.**

(57) Die Erfindung betrifft die antistatische Ausrüstung von Beschichtungsmassen.



ACTORUM AG

BAYER AKTIENGESELLSCHAFT 5090 Leverkusen, Bayerwerk
Konzernverwaltung RP
Patentabteilung Eck/ABc

Antistatische Ausrüstung von Beschichtungsmassen

Die Erfindung betrifft die antistatische Ausrüstung von Beschichtungsmassen.

Antistatisch ausgerüstete Polycarbonatfolien sind bekannt (z.B. EP-A-8100 438.1 und US-PS 4 450 249).

Diese Folien verlieren jedoch ihre permanent antistatischen Eigenschaften, falls sie nach technisch gebräuchlichen Verfahren bedruckt werden. Bei der Coextrusion von antistatischen Folien gemäß US-PS 4 450 249 mit anderen Folien oder Formmassen (Extrusionsbeschichtung) werden ebenfalls keine antistatischen Folien oder Formmassen erhalten.

Es wurde nun gefunden, daß durch Zusatz von Salzen bestimmter Sulfonsäuren zu Beschichtungsmassen die Oberflächen nicht antistatisch ausgerüsteter Formkörper permanent antistatisch werden, wenn sie mit diesen erfindungsgemäßen Beschichtungsmassen überzogen werden.

Gegenstand der Erfindung sind Druckfarben und Beschichtungsmittel, die durch Zusatz von 0,5 bis 10 Gew.-Teilen, vorzugsweise 1 bis 10 Gew.-Teilen und insbesondere 2 bis 7 Gew.-Teilen, pro 100 Gew.-Teile Druckfarbe oder Beschichtungsmittel eines Alkali- oder Erdalkalisalzes einer monomeren aromatischen Sulfonsäure der allgemeinen Formel (I)

$$(R)_w - A\left[(SO_3)_nM\right]_y \qquad (I),$$

in welcher

A für einen Arylrest mit 1-4 kondensierten aromatischen 6-Ringen,

R für $C_8$-$C_{20}$-Alkyl, $C_8$-$C_{10}$-Alkenyl, $C_6$-$C_{20}$-Cycloalkyl oder $C_6$-$C_{20}$-Cycloalkenyl,

M für ein Alkalimetall Kation, wie Li, Na, K bei n = 1, für zwei Alkalimetall Kationen bei n = 2, für ein Erdalkalimetall Kation wie Mg, Ca bei n = 2,

y für eine ganze Zahl von 1 bis 4,

w für eine ganze Zahl von 1 bis 4,

n für die Zahl 1 oder 2 steht,

oder einer polymeren aromatischen Sulfonsäure der Formel (II)

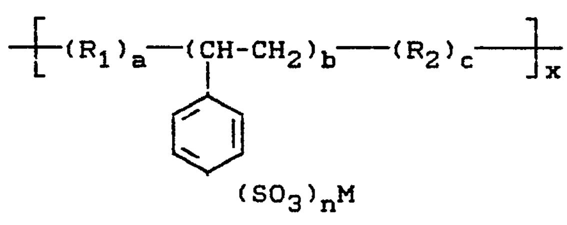

(II),

in welcher

| | |
|---|---|
| $R_1$ | für $C_2$-$C_6$-Alkylen, |
| $R_2$ | für $R_1$ oder einen von $R_1$ verschiedenen $C_2$-$C_6$-Alkylenrest steht, |
| M, n | die bei Formel (I) angegebene Bedeutung haben, |
| a, b, c | ganze Zahlen $\geq$ 1 sind, mit der Maßgabe, daß b für eine Zahl von 3 bis 30 steht, und die Summe a + b + c = 100, |
| x | für eine Zahl von 25 bis 100 000 steht, so daß das polymere Salz ein mittleres Molekulargewicht (Gewichtsmittelmolekulargewicht) $\bar{M}_w$ von 800 bis $10^6$ besitzt, |

permanent antistatisch ausgerüstet sind.

Ein weiterer Gegenstand der Erfindung sind Druckfarben und Beschichtungsmassen, die durch Zusatz einer Kombination von 0,5 bis 5 Gew.-Teilen eines monomeren Salzes der allgemeinen Formel (I) oder eines polymeren Salzes der Formel (II) und 0,05 bis 1 Gew.-Teilen jeweils pro 100 Gew.-Teile Druckfarbe oder Beschichtungsmasse eines N-Alkylphthalimids der Formel (III)

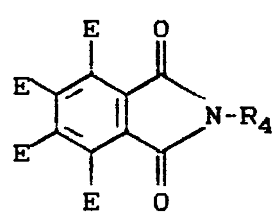

(III),

in welcher

E für H, Halogen, wie Cl oder Br steht,
$R_4$ für $C_1$-$C_{18}$-Alkyl, $C_6$-$C_{12}$-Cycloalkyl steht,

oder eines N,N'-Alkylidenbisphthalimids der allgemeinen Formel (IV)

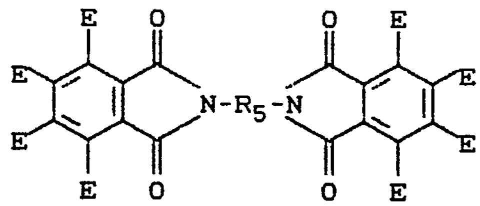

(IV)

in welcher

E für H, Halogen wie Cl oder Br steht und
$R_4$ für $C_2$-$C_{12}$-Alkylen oder Cyclohexylen steht,

permanent antistatisch ausgerüstet sind.

Bei dem erfindungsgemäßen Verfahren werden beschichtete Artikel erhalten, die auch nach der Weiterverarbeitung permanent antistatische Eigenschaften aufweisen.

Durch die permanent antistatische Ausrüstung der erfindungsgemäß beschichteten Oberflächen wird z.B. verhindert, daß bei deren Zwischenlagerung Staub angezogen wird, der zu Druckfehlern führt und damit zu erhöhten Ausschußraten.

Durch Verwendung der erfindungsgemäß beschichteten Oberflächen in explosionsgefährdeten Räumen (Exräumen) kann Funkenbildung, wie sie bei ungeschützten Oberflächen aufgrund elektrostatischer Aufladung entsteht, vermieden werden.

Die erfindungsgemäß antistatischen Druckfarben und Beschichtungsmittel können als polymeren Harzbestandteil beispielsweise Polyacrylate, Polyester, Polyurethane, Polyvinylchlorid, Celluloseester, Polyvinylacetat, ungesättigte Polyester oder deren Mischungen erhalten. Als Lösungsmittel sind alle in der Lack- und Druckfarbenindustrie gebräuchlichen Lösungsmittel wie beispielsweise Cyclohexanon, Ethylacetat, Butylacetat, Methylethylketon, Ketoalkohole zu verwenden.

Verlaufsmittel wie Silikone können zugesetzt sein. Die erfindungsgemäß permanent antistatischen Druckfarben und Beschichtungsmittel können vorzugsweise zum Bedrucken und Beschichten von Oberflächen verwendet werden, die leicht statisch aufladbar sind wie beispielsweise Kunstsstoffoberflächen aus Thermoplasten oder Duroplasten. Sie sind jedoch generell dort vorteilhaft einsetzbar, wo auf ein permanent antistatisches Verhalten der Beschichtung wie beispielsweise einer Druckfarbenschicht Wert gelegt wird.

Die Verarbeitung der erfindungsgemäß antistatischen Druckfarben- und Beschichtungsmittel erfolgt nach den gebräuchlichen technischen Verfahren wie z.B. durch Siebdrucken, Rakeln nach dem Roll-Coater-Verfahren, Begießen, Spritzen oder Tauchen.

Ein weiteres Anwendungsverfahren für die erfindungsgemäßen antistatischen Druckfarben- und Beschichtungsmittel besteht darin, daß man Kunststoffen, deren Oberfläche durch Tauchen in Lösungsmittel poliert werden, zusätzlich eine permanent antistatische Ausrüstung verleiht, indem man dem Lösungsmittel ein Gemisch aus antistatischem Additiv der Formel (I) oder (II) oder Kombinationen der Additive (I) + (III), (I) + (IV), (II) + (III) oder (II) + (IV) beimischt und gegebenenfalls einem der oben genannten Harzbestandteile beigibt.

Beispiele

Polycarbonatextrusionsfolien einer Dicke von 250 µm wurden nach dem Siebdruckverfahren mit einem 2-Komponentenpolyurethanlack bedruckt, der in einem Lösungsmittelgemisch aus Butylacetat, Ethylacetat, Cyclohexanon und Methylethylketon gelöst war. Der Oberflächenwiderstand $R_{OA}$, die elektrostatische Aufladung $E_e$ und die Halbwertszeit $t_H$ der Entladung bei verschiedenen Gehalten an Additiven der allgemeinen Formel (I) bis (IV) wurden gemessen (vgl. Tab. 2) nach Trocknung bei 70° C. Die Messung des Oberflächenwiderstandes der Beschichtung erfolgte nach dem Verfahren der DIN 53 482, die Prüfung der Endaufladung $E_e$ der Beschichtung und der Halbwertszeit $t_H$ der Entladung erfolgte nach DIN 53 486 bei 23° C und einer relativen Luftfeuchte von 50 %.

Tabelle 1

| Bsp.Nr. | Antistatik Additive, Mengenzugaben in Gew.-%, bezogen auf Druckfarben = 100 Gew.-% | |
|---|---|---|
| 1 | - | zum Vergleich |
| 2 | 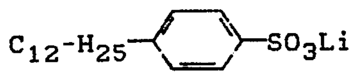<br>Lithium-dodecylbenzolsulfonat | Menge<br>3 % |
| 3 | " | 5 % |
| 4 | 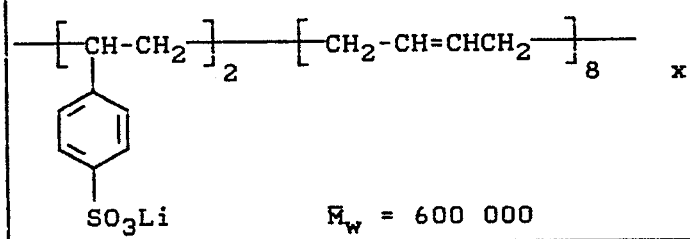<br>$\bar{M}_w$ = 600 000 | 1 % |
| 5 | Additiv Bsp. 4 (0,5 %) + N-Methyltetrachlorphthalimid, (0,5 %) ingesamt 1 % | |
| 6 | Additiv Bsp. 2 (1 %) + 1,6-Bis(tetraphthalimido)-hexan (0,5 %) ingesamt 1,5 % | |
| 7 | 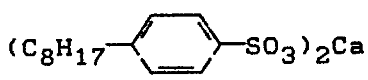 | 3 % |

Tabelle 2

| Bsp. Nr. | $R_{OA}$ (Ω) | $E_e$ (V/cm) | $t_H$ (sec) |
|---|---|---|---|
| 1 | > $10^{16}$ | 23 000 | > 3600 |
| 2 | < $10^{12}$ | < 100 | - |
| 3 | < $10^{10}$ | < 100 | - |
| 4 | < $10^{12}$ | 210 | 3 |
| 5 | < $10^{10}$ | < 100 | - |
| 6 | < $10^{10}$ | < 100 | - |
| 7 | < $10^{12}$ | 160 | 2 |

Patentansprüche

1. Druckfarben und Beschichtungsmittel, dadurch gekennzeichnet, daß sie mit 0,5 bis 10 Gew.-Teilen pro 100 Gew.-Teile Druckfarbe oder Beschichtungsmittel eines Alkali- oder Erdalkalisalzes einer monomeren aromatischen Sulfonsäure der Formel

$$(R)_w - A \left[ (SO_3)_n M \right]_y \qquad (I),$$

in welcher

A für einen Arylrest mit 1-4 kondensierten aromatischen 6-Ringen,

R für $C_8$-$C_{20}$-Alkyl, $C_8$-$C_{20}$-Alkenyl, $C_6$-$C_{20}$-Cycloalkyl oder $C_6$-$C_{20}$-Cycloalkenyl,

M für ein Alkalimetall Kation bei n = 1, für zwei Alkalimetall Kationen bei n = 2, für ein Erdalkalimetall Kation bei n = 2,

y für eine ganze Zahl von 1 bis 4,

w für eine ganze Zahl von 1 bis 4,

n für die Zahl 1 oder 2 steht,

oder einer polyeren aromatischen Sulfonsäure der Formel (II)

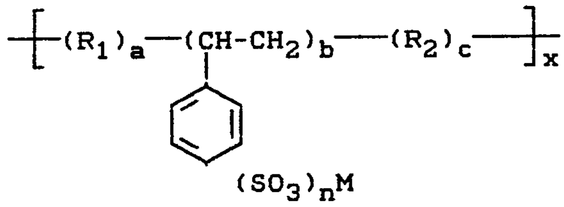

(II),

in welcher

| | |
|---|---|
| $R_1$ | für $C_2$-$C_6$-Alkylen, |
| $R_2$ | für $R_1$ oder einen von $R_1$ verschiedenen $C_2$-$C_6$-Alkylenrest steht, |
| M, n | die bei Formel (I) angegebene Bedeutung haben, |
| a, b, c | ganze Zahlen & 1 sind, mit der Maßgabe, daß b für eine Zahl von 3 bis 30 steht, und die Summe a + b + c = 100, |
| x | für eine Zahl von 25 bis 100 000 steht, so daß das polymere Salz ein mittleres Molekulargewicht (Gewichtsmittelmolekulargewicht) $\bar{M}_w$ von 800 bis $10^6$ besitzt, |

permanent antistatisch ausgerüstet sind.

2. Druckfarben und Beschichtungsmittel, dadurch gekennzeichnet, daß sie mit 0,5 bis 5 Gew.-Teilen der Alkali- oder Erdalkalisalze von aromatischen Sulfonsäuren der Formeln I und II in Anspruch 1 und 0,05 bis 1 Gew.-Teilen jeweils bezogen auf 100 Gew.-Teile Druckfarben oder Beschichtungsmasse eines N-Alkylphthalimids der Formel (III)

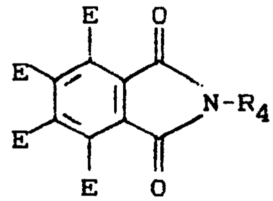 (III),

in welcher

E für H und Halogen steht,

$R_4$ für $C_1$-$C_{18}$-Alkyl und $C_6$-$C_{12}$-Cycloalkyl steht,

oder eines N,N'-Alkylidenbisphthalimids der allgemeinen Formel (IV)

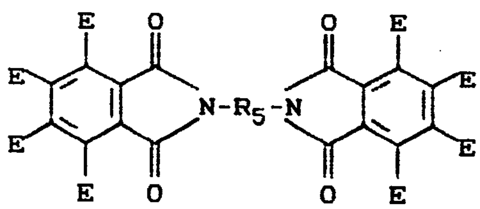 (IV),

in welcher

E für H und Halogen steht und

$R_4$ für $C_2$-$C_{12}$-Alkylen und Cyclohexylen steht,

permanent antistatisch ausgerüstet sind.

3. Verfahren zur Herstellung permanent antistatischer Oberflächen von Kunststoff-Formteilen durch Verwendung der Druckfarben und Beschichtungsmittel gemäß Ansprüchen 1 und 2.